# EUROPEAN PATENT APPLICATION

(11) **EP 2 071 507 A1**
(43) Date of publication of application: **17.06.2009**
(21) Application number: 08170939.6
(22) Date of filing: 08.12.2008
(51) Int. Cl.: G06Q 30/00, G06Q 50/00

(54) **Method, system and computer program product for distributing targeted messages to a room in a lodging facility**

(30) Priority: 11.12.2007 NO 20076340
(71) Applicant: Otrum Asa, Sentrum N-0104 Oslo (NO)
(72) Inventor: Raunela, Samu, N-0198, OSLO (NO); Bateson, Nigel, N-1177, OSLO (NO); Byberg, Pål, N-1412, SOFIEMYR (NO)
(74) Representative: Onsagers Ltd

(57) **Abstract**

Methods, systems and computer program products for distributing targeted messages to guests of lodging facilities. Message may be created with a message part and a profile part, the profile part including at least a target profile part and a distribution profile part. Messages are uploaded to a first message server where the distribution profile part is examined. The message is transmitted to one or more additional message servers based on the distribution profile part, In at least one destination message server the message is received and stored in a database of similarly profiled messages. From a property management system demographic data associated with at least one room in the lodging facility is received, a message is selected from the database based on a correspondence between the target profile part and the demographic data, and the message is displayed on a television set in the room associated with the demographic data.

## Description

### FIELD OF THE INVENTION

The present invention relates to in room information systems for hotels, and in particular to a system of targeted or personalized generation, distribution and presentation of information.

### BACKGROUND OF THE INVENTION

Hotel marketing people are constantly looking for new ways of reaching their guests with corporate messaging, tailored advertisements or other types of information anytime they check-in at their properties. The challenge is to offer the guest consistently branded messages, for instance of the type described above, that can be easily prepared, modified and distributed to the in room TV, according to specific requirement as such as time, location, guest profile, etc.

The typical approach today is mainly based on paper information available in the room or in the reception area. Systems for electronic distribution of information suffer a number of shortcomings, such as lack of interactivity and a rigid one way distribution of content that is created at a central location and only distributed downstream.

There is a clear need for systems that in an efficient manner can distribute messages between a large number of properties, and base the distribution on target profiles such that unnecessary distribution of messages to irrelevant locations and recipients can be avoided. Such a system should also be flexible enough to allow distribution of messages from other users than those located at a centralized head office.

This invention is related to the same inventors' co-pending application entitled METHOD AND SYSTEM FOR PROVIDING A PERSONALIZED ENTERTAINMENT SERVICE TO A GUEST AT ALODGING FACILITY, which is hereby incorporated in its entirety by reference.

### SUMMARY OF THE INVENTION

A system operating in accordance with the present invention is an information system providing a service that enables distribution of information based on target profiles. For instance, the invention makes it possible for hotel chains to produce any form of content using an easy to access Web based user interface and to distribute to the hotel chain guest rooms or hotel public areas. The invention also provides similar opportunities for targeted information distribution to other lodging facilities, including motels, holiday resorts, hospitals, retirement homes and the like.

A method for distributing targeted messages to guests of one or more lodging facilities, consistent with the principles of the invention, may include creating a message with a message part and a profile part, the profile part including at least a target profile part and a distribution profile part; uploading the message to a first message server; examining, at the first message server, the distribution profile part; transmitting the message to one or more additional message servers based on the distribution profile part; receiving the message in at least destination message server; storing the message in a database of similarly profiled messages; receiving, at the destination message server from a destination property management system, demographic data associated with at least one room in the lodging facility; selecting a message from the database of profiled messages based on a correspondence between the target profile part and the demographic data; and displaying the message on a television set in the room associated with the demographic data.

According to certain aspects of the method g to claim 1, the profile part may further comprise a time profile representing a set of rules for when the message should be displayed.

According to one embodiment of the invention, the target profile part may include a definition of a set of demographic characteristics of a desired recipient of the message and the distribution profile may include a definition of destinations to where the message should be distributed. The definition of destinations may, according to one embodiment, include a list of addresses of messaging servers associated with lodging facilities.

According to one aspect of the invention, a method may be performed in a server configured to distribute targeted messages in a hierarchical system of similar messaging servers associated with lodging facilities. The method may comprise receiving a message with a message part and a profile part, the profile part including at least a distribution profile part; examining the distribution profile part; transmitting the message to one or more additional message servers based on the distribution profile part; determining, based on the distribution profile part, if the message should be stored in a database of messages to be displayed from this server; and if the determination indicates that this is the case, storing the message in a database of messages.

According to some embodiments, the message may also include a target profile part, and the target profile part may include a demographic profile of a desired recipient of the message.

According to another aspect of the invention, a method may be performed in a server configured to communicate with in room television sets in a lodging facility to display messages on such television sets. Such a method may include storing in a database connected to the server, a plurality of messages each associated with a targeting profile; receiving, from a property management system, demographic data associated with at least one room in said lodging facility; selecting a message from among the plurality of messages based on a correspondence between the targeting profile and the demographic data associated with a room (and a guest registered as staying in that room); and initiating the display of the message by a television set in said room associated with said demographic data.

A television set may include, or be connected to, a set top box performing the functionality associated with the receipt and display of messages.

According to some embodiments of the invention, the method may include receiving, from the television set, a return message identifying a guest's response to the message. Such a return message may identify a related message, and the method may then include retrieving the identified related message from the database; and causing the related message to be displayed by the television set in the room.

In one embodiment, the related message represents a request to forward data from said messaging server to an external server; and the method further includes receiving, from said television set, a return message representing a positive response to said request; and transmitting said data to said external server. The data transmitted to an external server may identify a product or a service and a guest of the lodging facility.

According to one embodiment of the invention, a computer system constituting a messaging server for distributing targeted messages in a hierarchical system of messaging servers associated with lodging facilities, includes a replicator for receiving messages and transmitting received messages to additional messaging servers over a computer network, said messages including a message part and a profile part; a database for storing received messages; a device configured to examine said profile part of received messages in order to determine i) whether a received message should be distributed to additional messaging servers by the replicator, and ii) if said message should be stored in said database; and a message server part configured to initiate a display of messages stored in said database. The message may further include a target profile part. Such a target profile part may include a demographic profile of a desired recipient of the message.

In another embodiment of the invention, a computer system constituting a message server configured to communicate with in room television sets in a lodging facility to display messages on the television sets, may include a database for storing a plurality of messages each associated with a targeting profile; and a server connected to the database and to at least one communication network. The server may be configured to receive, from a property management system, demographic data associated with at least one room in said lodging facility (and a guest staying in that room); select a message from the plurality of messages based on a correspondence between the targeting profile and the demographic data; and transmit the selected message to a television set in the room associated with the demographic data.

In one embodiment, the server is further configured to receive, from the television set (or an associated set top box), a return message identifying a guest's response to said message. The computer system according to this embodiment may further be configured to extract, from said return message, an identification of a related message; retrieve the related message from the database; and transmit the message to be displayed by the television set in the room.

In some embodiments, the related message represents a request to forward data from the messaging server to an external server. The server may then be configured to receive, from said television set, a return message representing a positive response to said request; and transmit said data to said external server. The data transmitted to an external server may identify a product or a service and a guest associated with the room.

The invention also relates to computer program products embodied on a computer-readable storage medium. The computer program products include instructions which when executed by a computer system are operable to cause the computer system to perform acts consistent with the methods of the invention.

These and other features and advantages of the present invention will be presented in more detail in the following detailed description and the accompanying figures which illustrate by way of example principles of the invention.

### BRIEF DESCRIPTION OF THE DRAWINGS

FIG. 1 is a diagram showing an embodiment of the invention from the perspective of message creation and distribution;
FIG. 2 is a flowchart illustrating content creation;
FIG. 3 shows an example of a user interface for content creation;
FIG. 4 is a flowchart illustrating content distribution;
FIG. 5 is a flowchart illustrating selection and display of messages;
FIG. 6 is a diagram showing an embodiment of the invention from the perspective of local message selection and display at a hotel; and
FIG. 7A-C illustrates various ways of displaying a message on a television screen together with other content.

### DESCRIPTION OF EXEMPLARY EMBODIMENTS

The following description presents exemplary embodiments of the invention, according to which the system is configured to provide means for creating and distributing messages to establishments such as hotels or other lodging facilities, and display the messages in a targeted manner to guests, based on demographic information accessed from the hotels Property Management system (PMS). It will be understood by those skilled in the art that the exemplary embodiments are intended to provide a better understanding of the invention and that they should not be interpreted as limitations to the invention, the scope of which is defined by the appended claims.

It will also be understood that the term demographic information is intended to cover any information that is useful in characterizing a person or associating a person with a particular group where some people belong and other people do not belong. Examples of demographic identifiers include age, gender, nationality, native language, religion and income level, and also strictly commercial identifiers such as membership of a loyalty program, holder of a particular credit card, and any information about preferences a person or persons may have voluntarily registered about themselves. The invention is not limited to any particular type of demographic identifier, and any, all or none of the examples mentioned above may be relevant to any particular embodiment of the invention.

The term Property Management System (PMS) is intended to cover any server or computer system, or combination of servers or computer systems, capable of delivering demographic information about guests or customers of a lodging facility together with an identification of a room and/or a television set associated with the guest. For instance, while identification of a guest and of a room may be received from one server, additional demographic data could be received from an additional server, e.g. a customer database associated with a loyalty program, based on the information received from the first server.

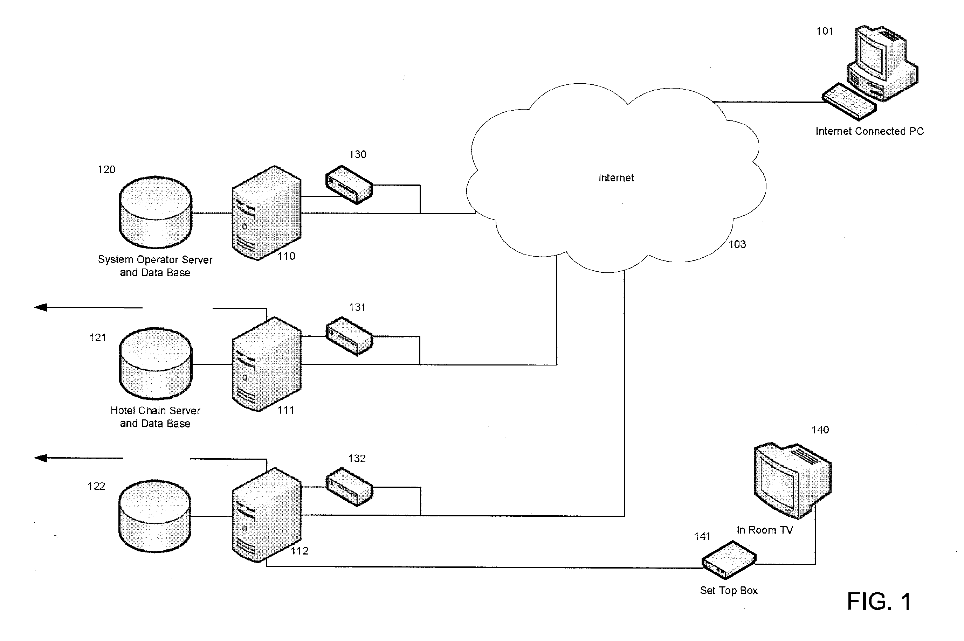

FIG. 1 is an exemplary embodiment of a system configured to operate in accordance with the invention to create and distribute messages. The system may include a personal computer 101 connected to the internet 103 and equipped with a browser application. According to some embodiments of the invention, this computer 101 may be located anywhere as long as it has the necessary network communication capabilities. From this computer 101 a user may access a content creation web site serving a web application that provides access to tools and templates for creating messages. The web application may be created using Asynchronous JavaScript and XML (AJAX), or other combinations of programming languages, database software, web server software that are known to those skilled in the art (examples include but are not limited to Ruby on Rails, PHP, Apache, MySQL, and various solutions provided by Microsoft Corp). The web site may be hosted by a web server. According to a first embodiment of the invention this web server may be part of a central message server 110 configured to operate at a top level of the system.

According to an alternative embodiment of the invention, the web site with the web application may be hosted by a message server that operates locally. In the example illustrated in FIG. 1 this is illustrated as a message server 111 operating at an intermediate level of the system, e.g. representative of a hotel chain including a number of hotels.

According to yet another embodiment of the invention, the web site with the web application may be hosted by a message server that operates locally at an individual hotel. In FIG. 1 this is illustrated as a local hotel server 112.

The creation and distribution of content, or messages, will be described in further detail below.

After content has been created it may be uploaded to one or more servers in the system.

According to a first embodiment of the invention, the destination to which the message is uploaded may depend on the access rights of the user. According to another embodiment, the destination may depend on default settings in the system. According to yet another embodiment, the destination may be determined based on the location of the web server from which the web application was accessed.

According to embodiments consistent with the principles of the invention, a user may define several conditions such as where a message should be displayed, when it should be displayed, and to whom it should be displayed. Such a set of conditions may be referred to as a profile of the message. One such profile may be a distribution profile, defining the geographic areas, range of hotels or individual hotels to which the content should be distributed. A second profile may be a target profile, defining characteristics of the users for which the content is intended. A third profile may be a definition of when the content should be displayed, or for how long it should be displayed, or whether it should be displayed only once or repeatedly to each guest.

The system illustrated in FIG. 1 shows three different hierarchical levels. According to some embodiments the system is provided by an operator that offers services to several hotel chains, and the central server 110 may serve these several hotel chains. A hotel chain server 111 may serve several hotels in one chain, and a local hotel server 112 may serve only one hotel.

When a message has been created using the web application, it may be stored in a database. If the message is uploaded to a database 120 at the top system level, it will be available for distribution down to lower level databases such as a database 121 at a hotel chain level, or to a database 122 at a local hotel. This distribution may be performed through a process referred to as replication, and may be determined based on the distribution profile associated with the message.

The process of replication may be handled by a replicator. A replicator may be a software component of a server 110, 111, 112, or it may be configured to operate on individual hardware equipment connected to the server and to the Internet 103. FIG. 1 illustrates replicators 130, 131, 132 on each of the levels illustrated in this particular example.

According to some embodiments consistent with the invention, a message may only be replicated down to lower level servers of the system. According to this alternative, a message that is local to one hotel may be introduced at the hotel itself 112 or at any higher level of the system and replicated down to the hotel. A message that should be distributed to several hotels in the same chain must be introduced at the hotel chain level 111 or higher (or at some intermediate level representing a branch or division of the chain not illustrated in FIG. 1) and replicated to the appropriate local hotels. Finally, if a message should be replicated to hotels in several chains it must be introduced at the top system level 110 (or independently at several chain level sites).

According to alternative embodiments, distribution may also be performed up to higher levels, in dependence of the access rights of the user who created or uploaded the message.

When a message finally arrives in a local hotel server 112, it is stored in the local database 122 along with its profile. According to an embodiment consistent with the principles of the invention, that server may then access information from the hotel PMS in order to create a profile for each room. Messages may then be selected such that the message target profile corresponds to the guest profile associated with a particular room.

In FIG. 1 this is illustrated by an arrow indicating a connection from the hotel server 112 to the hotel PMS (not shown). According to some embodiments of the invention, display of messages may be handled by a server at a higher level than individual hotels, which may access a PMS for the entire chain (or the several PMS systems of the hotels which it serves). This is represented in FIG. 1 by an arrow indicating a connection from a chain server 111 to a chain PMS (not shown).

Finally the server at a hotel 112 may be configured to communicate with a television set 140 located in a guest room, possibly by way of a set top box 141.

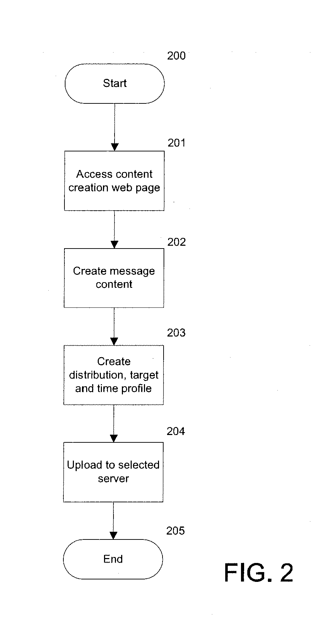

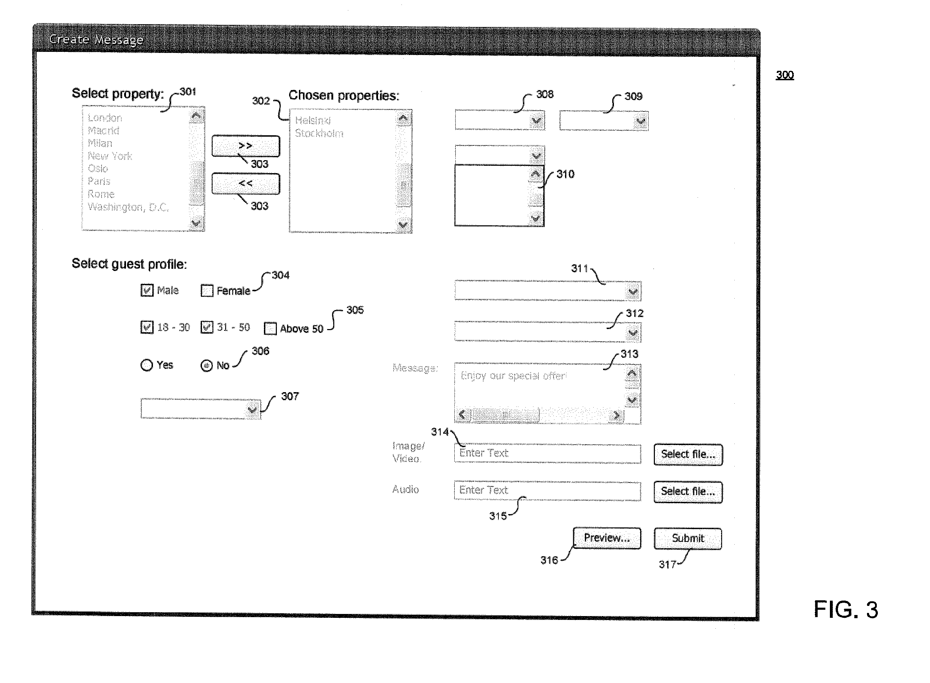

Reference is now made to FIG. 2 which illustrates in a flowchart the process of creating and uploading content. The process starts in a first step 200. In a next step a user directs his web browser to the web site hosting the web application used for content creation. An example of a user interface of such a web application is illustrated in FIG. 3. In step 202 the user creates the web message using the web application. According to some embodiments a message may consist of several related messages. A first message may serve as an introductory message that invites a guest to accept additional information, a second message containing additional information, and possibly also additional messages after this. The structure and content of the messages will be described in further detail below.

The user may then, in a step 203, create the profile of the message, which as described above may include a distribution profile part, a target profile part and a time profile part.

In a next step 204 the user uploads the message to the appropriate server, as discussed above.

FIG. 3 shows a user interface 300 which may be used to create messages to be distributed through a system in accordance with the present invention. The user interface may be generated by a web server as a mark up language document (e.g. HTML, XML), or it may be part of a client application that communicates with a server application.

According to this example, in order to create a distribution profile, a user may select a number of properties where it is desired that the message is displayed. In a first window properties that are available for selection by that user may be displayed in a first list 301. Properties that have already been selected may be listed in a second list 302. Buttons 303 allow the user to add or remove properties to and from the list of already selected properties 302. In the example illustrated, the properties are identified by the cities of their location, but other alternatives, such as e.g. names of hotels, etc., are consistent with the principles of the invention. The properties available for selection may be listed in a database and accessed by a web application

According to a first embodiment the distribution profile includes the names of the properties or destinations as specified by the user, and the messaging servers, when distributing the messages, are configured to obtain an address of a messaging server corresponding with the name of the property, such as an IP address or an e-mail address. According to an alternative embodiment, the correct server addresses are inserted directly into the message when the message is created.

Also illustrated in the example of FIG. 3, a user may create a target profile by selecting certain desired features of the targeted recipients of the message. According to this particular example, a user will be able to select the desired gender of recipients. Using check boxes 304 the user may select "Male" and/or "Female". Further, the user may select a desired age range using check boxes 305, exemplified here by "18-30", "31-50" and "Above 50". Radio buttons 306 may be used to select whether the message should be directed only to recipients that are members of a loyalty program. Finally, in this example, a user may select a type or range of rooms to which the messages are particularly directed using drop down menu 307. A type or range of rooms may include such alternatives as rooms with single beds, rooms with double beds, rooms with family facilities, suites, smoking or non-smoking rooms, rooms on a particular floor etc.

It will be understood by those with skill in the art that other features could be selected and other values or ranges of values could be provided within the scope of the invention. Also, the use of various input controls such as check boxes, radio buttons, drop down menus or any other user interface elements may be designed and configured according to design criteria of the particular use case without abandoning the principles of the invention.

Additional input controls have been provided in the example of FIG. 3 in order to illustrate how a user may specify a schedule, or time profile. According to the example illustrated in FIG. 3 the user may select a start and end date for the distribution of the message using drop down menus 308, 309. Certain messages may be more relevant at a particular time of day, and this can be specified using drop down menu 310.

Finally, the user may create the content of the message. According to the example illustrated in FiG. 3, a particular template may be chosen using drop down menu 311. Consistent with principles of the invention, templates may be available in order to select colors, logos, background etc. A second drop down menu 312 may be present in order to allow the user to select a language for the message. The language may influence the language used by default elements of the presentation of the message, such as instructions to the recipient regarding how to interact with the message.

A text box 313 may be provided in order for the user to enter a text part of the message.

Finally, using text boxes and/or buttons 314, 315 the user may specify or select additional media content to be added to the message. According to this example such media content may be in the form of image/video files 314 and audio files 315.

Additional criteria may be added to the profile of a message according to design needs. By way of example, as part of the message profile it may be specified that the message should be associated with particular content type. For instance, the user may desire that a message should be displayed if a guest selects the main menu of the in-room television system, while another message should be displayed if the guest accesses the pay per view menu.

Finally the user may be able to preview the message as it will be displayed on an in-room television set using a preview button 316, or submit the created message using a submit button 317.

When the user submits a message by clicking on the submit button 317, he may, according to some embodiments of the invention, be presented with an option to create a next message that will be presented if a guest chooses to interact with the first message, as described in further detail below. It the user confirms that a next message should be created, the user may be presented with the user interface of FIG. 3 again, where he or she can create the next part of the message.

According to alternative embodiments, the user interface may include additional input opportunities where a user can specify if and to what extent additional message parts should be created. In some embodiments, references to additional message parts or even references to outside information sources (e.g. URLs referencing content on the Internet) may be entered explicitly.

The various user interface elements illustrated in FIG. 3, or other such elements that are possible within the scope and spirit of the invention, will provide the user with an opportunity to interact with functionality that provides access to the various features of a system operating in accordance with the invention, including features for accessing or submitting content e.g. over the Internet 103, using standardized communication methods that are known to those with skill in the art.

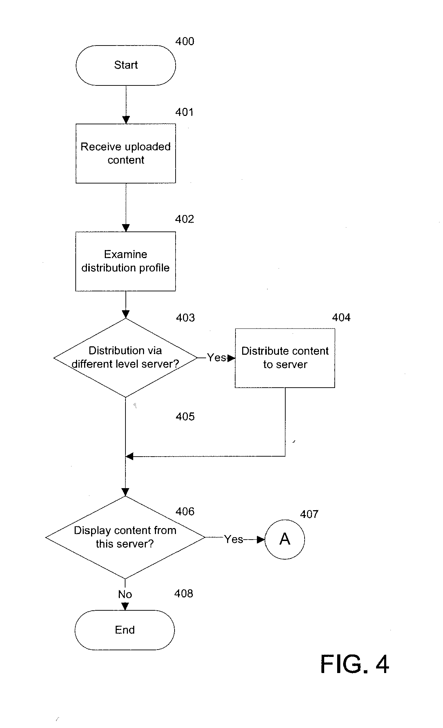

FIG. 4 illustrates how the process of replication, or distribution, proceeds according to some embodiments of the invention. The process starts in a first step 400. In a next step 401 a message is received as it is being uploaded by a user who has created the message, e.g. by using the web application as described above.

When a message server has received an uploaded message, the message profile may be examined 402. The message server may be configured to determine whether the message should be distributed by one or more message servers at a different level 403. As already described, message servers may be configured to only distribute messages to other message servers at a lower level. Alternatively, message servers may be configured to distribute messages to higher level servers dependent on the access rights of the user that created and/or uploaded the message, as described above.

If the message, according to its profile, should be distributed to different message servers, the replicator 130,131,132 establishes a connection with the appropriate server and transfers the message. According to some embodiments consistent with the principles of the invention, the replicator may be a separate dedicated application. According to other embodiments it may be an individual web server, or even the same web server as that which serves the web application. For distributing the messages, the replicator may use protocols designed for this particular purpose, or standard protocols that are known in the art, such as HTTP or FTP.

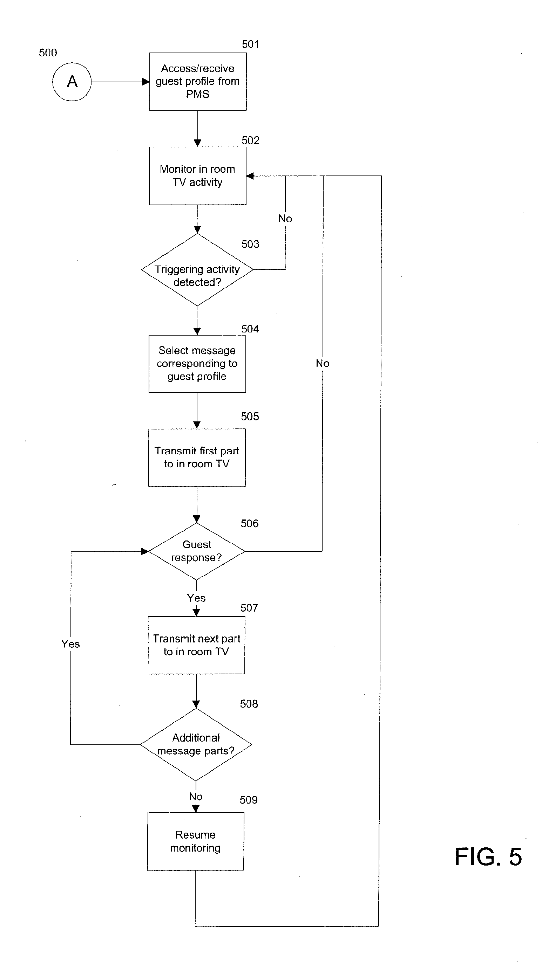

The message server may then determine in a step 406 whether it (or some other server with which it cooperates) is expected to display the message on in room television sets at a location it is configured to control. If this is the case, the process may continue 407 as illustrated in FIG. 5. If not the process of distributing messages may terminate in a termination step 408, until it is restarted by the upload of a new message.

Reference is now made to FIG. 5 which illustrates in a flowchart how messages may be distributed to individual hotel rooms according to some embodiments of the invention.

Most hotels and lodging facilities operate a so called property management system (PMS) which is a system configured to receive and hold information regarding guests, rooms, schedules, received booking information and information regarding other resources of the hotel. The PMS may hold information regarding which guests are registered as staying at which rooms, along with certain information about these guests, such as nationality, gender, age, whether they are members of a loyalty program, etc.

As described with reference to FIG. 4, a system that is configured to handle display of messages at a location, and in that case the process illustrated in FIG. 4 may continue as shown in FIG. 5, step 500. In any case, a local message server may have received one or more messages that should be displayed at that property according to a targeting profile and a time profile. As already described, such messages may have been created and uploaded directly to that message server, or they may have been received through the process of replication. Received messages will typically be stored in a local database, as illustrated in FIG. 1.

The server may be further configured to access or receive guest information from the PMS. According to some embodiments of the invention, the system is configured to request this information from the PMS, e.g. at regular intervals. The update intervals may be based on how often, on average, guests check in to the hotel and how long time it takes from a guest has checked in and until they are in their room, for example every few minutes. However, the update interval may be considerably shorter or longer, based on design criteria based on such factors as system load etc.

According to other embodiments consistent with the invention, the PMS may be configured to push updated information to the message server every time a new guest has checked in or checked out from the hotel. In either case, the server receives the relevant information from the PMS in a step 501. The PMS and the message server may communicate over an application programming interface (API).

Based on the information received from the PMS, the server is able to construct a list of rooms in which there are guests, and associate the rooms with the demographic data received from the PMS. (Legal constraints relating to privacy may limit the amount and types of demographic data that can be made available to the server and this may vary from country to country.)

The system may now monitor the activity of the television sets in the various rooms in the hotel in a step 502. As long as no relevant triggering activity is detected 503, the system continues to monitor. When a triggering activity is detected the process continues.

A triggering activity may be that the television is turned on in a room, that a particular channel is selected on the television or the set up box, or any number of other types of activity associated with a television or a set top box.

The process continues in step 504 where the system selects which message to display on the television from which the activating trigger was received. This may be done by first looking up the demographic data associated with the room from which the trigger was received, and then to select a message that has a targeting profile corresponding to those demographic data. Additional message profile data may also be considered, such as time of day, type of room, etc.

In some embodiments of the invention, as already described above, a message may include a first part that is displayed first and that invites the user to respond, and a next part that is displayed if the user responds favorably. This is illustrated in FIG. 5 as a step 505 where a first part of a message is transmitted to the room, and a step 506 where the system waits for a response. The message server may wait for a response for a certain time, and if no such response has been received at time out, the process returns to monitoring in room television activity in step 502. The message may then disappear from the screen of the in-room television set automatically. Alternatively, the system may return to step 502 after receipt of a dismissal from the guest. This may also, according to some embodiments, be implemented by a time out functionality in the set top box which removes the message from the screen of the in room television and sends a dismissal signal to the message server which then returns to step 502.

Signaling between the message server and the room will be described in further detail below.

If a favorable response is received from the guest, the system proceeds to transmit the next part of the message to the television or set top box to be displayed 507. According to some aspects of the invention, the message may include additional message parts. If this is the case, as determined in step 508, the system may again wait for a response from the guest in a return to step 506 described above. If or when the message has no additional parts, the system may resume monitoring 509, and return to step 502.

According to some embodiments the main content of the message may contain additional opportunities for the user to interact, e.g. in terms of a reference to even more information, a request to acknowledge a transaction etc. In such a case, the system may receive additional responses from the guest, and it may be necessary to transmit additional content to the television or set top box.

In some embodiments consistent with the principles of the invention, a message may invite a guest to confirm that he or she is interested in information or a service provided by a third party. This may necessitate the forwarding of information about the guest to the third party, e.g. as an e-mail or some other type of message transmitted from the message server to the third party. Such forwarding of personal information may, in many jurisdictions, require that the guest is made explicitly aware that such forwarding of information is required and that the guest confirms that he or she accepts this. This can, according to some embodiments of the invention, be handled as part of the interactivity process provided as an aspect of the present invention. If the guest accepts forwarding of information, the relevant information may already be present in the messaging server as part of the guest profile associated with the room, or it may be obtained from the PMS.

In some embodiments of the invention user interaction may allow the set top box to request information content from elsewhere and allow the user to continue to interact with this content - in some embodiments provided that the guest has accepted this as described above. One example of such an embodiment is where the message transmitted to the room includes a reference to information on the Internet (e.g, a URL). Interaction from the user may then invoke a browser application that may be installed on the set top box, and a browsing session may be initiated. In such a case the messaging server may return to monitoring, while the browsing session is handled by the set top box and the browser application independently.

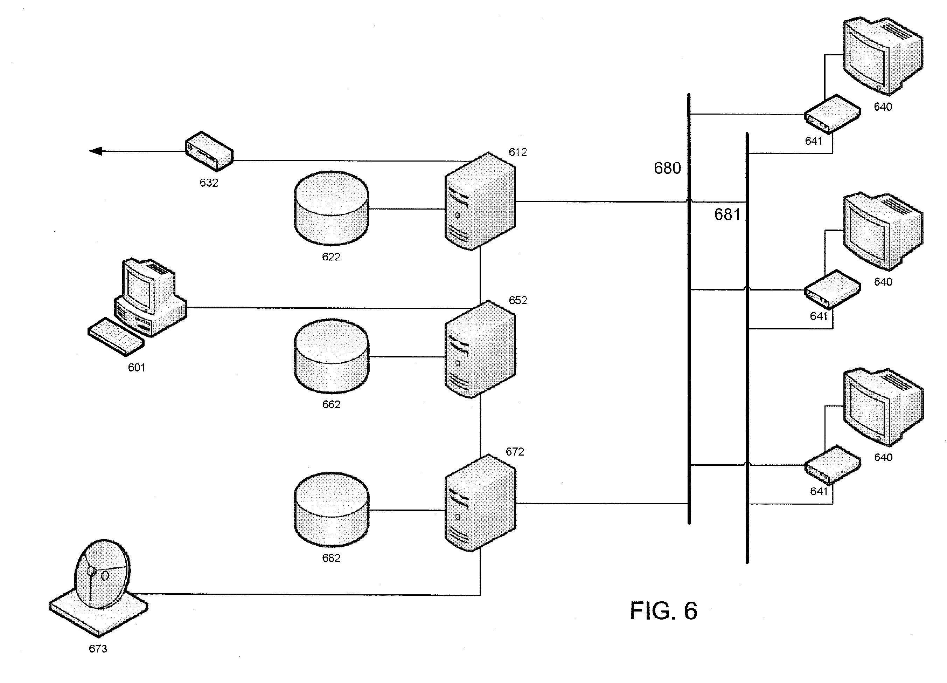

Reference is now made to FIG. 6, which shows a diagram of an exemplary embodiment of the invention from the perspective of local message selection and display at a lodging facility such as a hotel.

At a front desk, in a reception area or in an office of a lodging facility such as a hotel, a computer 601 may be located. For the purposes of this exemplary embodiment it will be assumed that the lodging facility is a hotel, but the invention is not so limited in this respect. The computer 601 may be connected to the Internet or some other communication network (not shown) and in that respect it may serve in a similar fashion to computer 101 shown in FIG. 1. According to some embodiments, however, the computer 601 may primarily be configured to communicate with a local property management system (PMS) 652. When a guest arrives at the hotel, he or she may be registered in the PMS 652 by way of the computer 601. If the guest has a reservation, some information may already be present in the PMS, other information may be added during check in or registration of the guest. An example of information that may be registered during the check in procedure includes name, home address, nationality, age, gender, assigned room number, payment method, whether the guest is member of a loyalty program, etc.

The information entered into the PMS may be stored in a PMS database 662.

A local message server 612 operating in accordance with the principles of the present invention may also be provided. This server may correspond with the local server 112 illustrated in FIG. 1. The local server may be connected to or include a local database 622, which may correspond with the local database 122 shown in FIG. 1. The message server 612 may also be connected to or include a replicator 632 corresponding with the replicator 132 shown in FIG. 1. The local message server 612 may be configured to receive messages as described above, e.g. with reference to FIG. 4. The local message server 612 may also be configured to request or receive guest profile information from the PMS server 652, as described in step 501 of FIG. 5.

According to the exemplary embodiment shown in FIG. 6, an entertainment server 672 is also provided. In embodiments consistent with the principles of the invention, the entertainment server 672 may be connected to a delivery system for entertainment programming, in FIG. 6 illustrated as a satellite dish 673. The entertainment server 672 may also be connected to or include an entertainment database 682. The entertainment delivery system may, by way of example, include one or more of a television cable network, a satellite receiver, Internet download capabilities, radio and television reception equipment etc. The entertainment database 682 may include equipment for storing and accessing entertainment programming such as pay per view video, video games, music etc. Programming stored in the database 682 may be received from the entertainment delivery system 673, or it may be loaded into the database locally and/or manually. Programming may be stored on hard drives, optical discs or any other storage media that is found convenient during system design, as is known by those with skill in the art.

The local message server 612, the PMS server 652 and the entertainment server 672 may be connected to each other such that they are able to retrieve information from each other or transmit information to each other. Such communication may e.g. be transmitted over a local area network.

The system at the hotel may further include television sets 640 in a number of guest rooms. Such television sets may correspond with the television set 140 described with reference to FIG. 1. A television set 640 may be connected to a set top box 641 corresponding with the set top box 141 shown in FIG. 1.

According to the example illustrated in FIG. 6, entertainment programming may be transmitted over a local entertainment network 680. According to some embodiments, this network may be a cable TV network transmitting analog radio and television programming. According to other embodiments the entertainment programming may be transmitted as digital information. Examples of digital formats that may be used for transmission of audio and video include MPEG-2 and other MPEG standards, and other open and proprietary standards that are well known to those with skill in the art. Programming may be broadcast over the local entertainment network 680 such that they may be received by any of the in room television sets 640, directly or over a set top box 641. Programming may also be addressed to a particular television set 640 or set top box 641 in response to a request received from that television set 640 or set top box 641.

According to some embodiments, the local entertainment network 680 may include coaxial cables (e.g. 75 ohm coaxial cable), but other alternatives include twisted pair, wireless and fiber optics.

The example in FIG. 6 also includes a second network which may be configured to operate as a local messaging network 681. The local messaging network 681 may be connected to the local message server 612 and configured to distribute messages from the messaging server 612 to the various in room television sets 640. According to some embodiments, the set top boxes 641 may be configured to transmit information to the messaging server 612, including e.g. information described as triggering activity in step 503 of FIG. 5. The messaging server may be configured to respond to any such triggering activity by selecting a message from the message database 622 based on a profile associated with the room wherein the set top box that transmitted the triggering information is installed. The selection of a message is described above with reference to step 504 in FIG. 5.

When a message is selected, it may be transmitted to the appropriate set top box 641 over the messaging network 681.

According to some embodiments of the invention, the transmission of information between the messaging server 612 and the set top box 641 may be performed using well known communications protocols such as TCP/IP or other well known communications protocols. If information is provided in the form of a mark up language document (e.g. HTML or XML) and the set top box includes a browser application or some similar user agent, the HTTP protocol or similar protocols may be used. As described above with reference to FIG. 5, in some embodiments of the invention a message may include a URL reference to information that is not present in the messaging database 622, but which may reside on some server on the Internet. In this case the messaging network 680 may be connected to the Internet, e.g. over a router (not shown in the drawing).

According to some embodiments the messaging network 681 may include an Ethernet network on twisted pair, wireless, fiber optics or over a coaxial network.

It will be understood by those with skill in the art that physically, the entertainment network 680 and the message network 681 may be one and the same network (i.e. entertainment and messages may be transmitted over the same medium). The two networks may also be one and the same logically speaking, in the sense that they use the same communication protocols. By way of example, entertainment and messages may both be transmitted over a twisted pair network using the internet protocol (IP). Messages may be transmitted using a messaging format which includes or embeds text, audio (e.g. MP3), graphics (e.g. JPG or GIF) and video (e.g. MPEG) over TCP, while entertainment is streamed over the same network using video or audio (e.g. MPEG) over UDP. As those with skill in the art will realize, numerous other alternative are consistent with the principles of the invention.

The PMS server 652 may also, in accordance with some aspects of the invention, be configured to communicate with set top boxes in the rooms, e.g. in order to provide guests with the opportunity to check out from their room using their television sets, or to charge pay per view movies directly to the room. It will be understood by those with skill in the art that such communication may be transmitted over one of the local networks 680, 681 directly, using the methods described above. Alternatively, the entertainment system may operate as a front end for the PMS with respect to communication with the rooms.

When a triggering event is sent to the messaging system from a set top box, as has been described above, and a message is returned to the set top box, the set top box may be configured to handle this. The simplest way of displaying a message is simply to let the message occupy the entire screen and thus interrupting whatever information or programming is currently being displayed on the screen. However, such interruption may be experienced as unnecessary intrusive by the guest, and the invention provides a number of alternative embodiments for handling this.

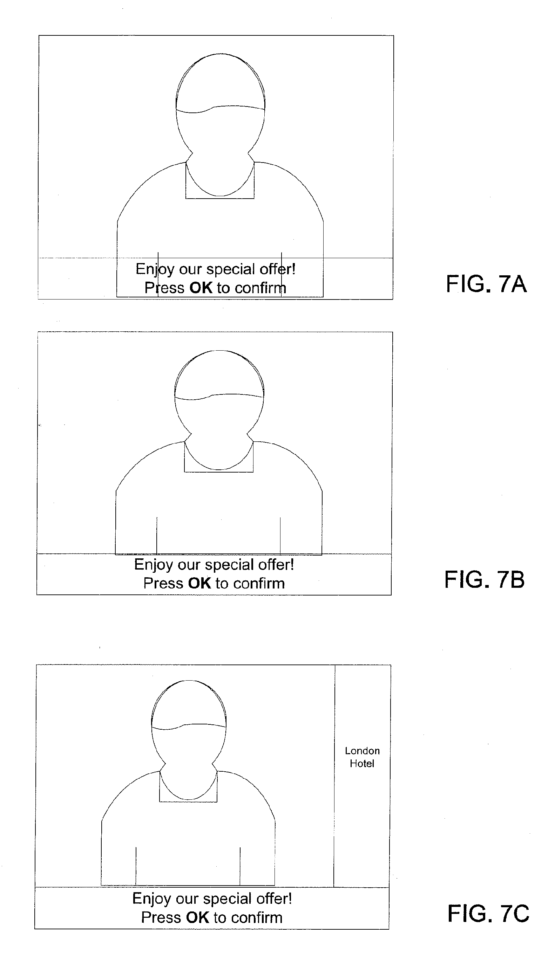

According to a first embodiment, illustrated in FIG. 7A, the message is made semi transparent and is made to occupy only a part of the screen. In this manner, the programming may continue uninterrupted. However, interfering with the content inside an image provided by a third party, may be restricted by copyright law and may require the approval of whoever owns the content that is displayed at any time.

According to a second embodiment, illustrated in FIG. 7B, the message occupies a part of the screen, such as an upper or lower section or a side bar, while the original content is squeezed in order to make room for the message. This, too, may be undesired, since the original content will be distorted.

According to a third embodiment, illustrated in FIG. 7C, the original content is reduced in size, but its aspect ratio is maintained. The original image may be placed in one corner of the screen, while the message is presented in an upper or lower band or a side bar. This leaves a third section of the screen, which may be used for branding purposes, or for any other type of additional information.

The set top box 641 may be configured to receive programming or menu information from the entertainment server 672 as well as messaging information from the messaging server 612. The set top box 641 may further be configured to create a composite image from the received parts, if necessary by transforming one or more of the received parts by making them semi-transparent, stretching them or reducing their size. This may be performed using image manipulation techniques that are well known in the art.

The set top box 641 may further be configured to receive signals from a remote control operated by a guest, representing the guest's response to a message displayed on the screen. Upon receipt of such a signal, or upon detection of a triggering event (such as the display of a particular menu or page in the interactive entertainment system) the set top box may be configured to send the necessary information to the messaging server as described above. The set top box may also be configured to send instructions and receive programming data from the entertainment server or the PMS as described above.

It should be understood that while the set top box 641 has been described as a separate component, it is consistent with the principles of the invention to include the functionality of the set top box as part of the television set 640, e.g. as an internal TV card. In the above description of various embodiments of the invention, the term set top box is intended to includes internal TV cards.

While the examples above have focused on television sets installed in rooms occupied by guests, it is consistent with the principles of the invention to install the same functionality in television sets 640 and set top boxes 641 provided in public areas of a lodging facility, such as a bar, a swimming hall, an exercise room etc.

The local servers providing the functionality of the messaging server 612, the PMS 652 and the entertainment server 672 have been described as separate servers and illustrated as individual computers in the drawings in the examples described above. However, it is in accordance with aspects of the invention to provide the functionality of these various servers as separate functions installed on the same computer system.

## Claims

1. A method for distributing targeted messages to guests of one or more lodging facilities, comprising:
creating a message with a message part and a profile part, said profile part including at least a target profile part and a distribution profile part;
uploading said message to a first message server;
examining, at said first message server, said distribution profile part;
transmitting said message to one or more additional message servers based on said distribution profile part;
receiving said message in at least destination message server;
storing said message in a database of similarly profiled messages;
receiving, at said destination message server from a destination property management system, demographic data associated with at least one room in said lodging facility;
selecting a message from said database of profiled messages based on a correspondence between said target profile part and said demographic data; and
displaying said message on a television set in said room associated with said demographic data.

2. The method according to claim 1, wherein said profile part further comprises a time profile representing a set of rules for when the message should be displayed.

3. The method according to claim 1, wherein said target profile part includes a definition of a set of demographic characteristics of a recipient of the message and said distribution profile includes a definition of destinations to where the message should be distributed.

4. The method according to claim 3, wherein said definition of destinations includes a list of addresses of messaging servers associated with lodging facilities.

5. A method in a server configured to distribute targeted messages in a hierarchical system of messaging servers associated with lodging facilities, comprising:
receiving a message with a message part and a profile part, said profile part including at least a distribution profile part;
examining said distribution profile part;
transmitting said message to one or more additional message servers based on said distribution profile part;
determining, based on said distribution profile part, if said message should be stored in a database of messages to be displayed from this server; and
based on the outcome of said determination, storing said message in a database of messages.

6. The method according to claim 5, wherein said message further comprises a target profile part.

7. The method according to claim 6, wherein said target profile part includes a demographic profile of a desired recipient of the message.

8. A method in a server configured to communicate with in room television sets in a lodging facility to display messages on said television sets, comprising:
storing in a database connected to said server, a plurality of messages each associated with a targeting profile;
receiving, from a property management system, demographic data associated with at least one room in said lodging facility;
selecting a message from said plurality of messages based on a correspondence between said targeting profile and said demographic data; and
causing said message to be displayed by a television set in said room associated with said demographic data.

9. The method according to claim 8, further comprising:
receiving, from said television set, a return message identifying a guest's response to said message.

10. The method according to claim 9, wherein said return message identifies a related message, and further comprising:
retrieving said related message from said database; and
causing said message to be displayed by said television set in said room.

11. The method of claim 10, wherein said related message represents a request to forward data from said messaging server to an external server; and further comprising:
receiving, from said television set, a return message representing a positive response to said request; and
transmitting said data to said external server.

12. The method of claim 11, wherein said data identifies a product or a service and a guest associated with said room.

13. A computer system constituting a messaging server for distributing targeted messages in a hierarchical system of messaging servers associated with lodging facilities, comprising:
a replicator for receiving messages and transmitting received messages to additional messaging servers over a computer network, said messages including a message part and a profile part;
a database for storing received messages;
a device configured to examine said profile part of received messages in order to determine i) whether a received message should be distributed to additional messaging servers by the replicator, and ii) if said message should be stored in said database; and
a message server part configured to initiate a display of messages stored in said database.

14. The computer system according to claim 13, wherein said message further comprises a target profile part.

15. The computer system according to claim 14, wherein said target profile part includes a demographic profile of a desired recipient of the message.

16. A computer system constituting a message server configured to communicate with in room television sets in a lodging facility to display messages on said television sets, comprising:
a database for storing a plurality of messages each associated with a targeting profile; and
a server connected to said database and to at least one communication network, said server being configured to:
receive, from a property management system, demographic data associated with at least one room in said lodging facility;
select a message from said plurality of messages based on a correspondence between said targeting profile and said demographic data; and
transmit said selected message to a television set in said room associated with said demographic data.

17. The computer system according to claim 16, wherein said server is further configured to receive, from said television set, a return message identifying a guest's response to said message.

18. The computer system according to claim 17, wherein said server is further configured to:
extract, from said return message, an identification of a related message;
retrieve aid related message from said database; and
cause said message to be displayed by said television set in said room.

19. The computer system of claim 18, wherein said related message represents a request to forward data from said messaging server to an external server, said server being further configured to:
receive, from said television set, a return message representing a positive response to said request; and
transmit said data to said external server.

20. The computer system of claim 19, wherein said data identifies a product or a service and a guest associated with said room.

21. A computer program product embodied on a computer-readable storage medium, the computer program product including instructions which when executed by a computer system constituting a messages server, are operable to cause the computer system to perform acts comprising:
receiving a message with a message part and a profile part, said profile part including at least a distribution profile part;
examining said distribution profile part;
transmitting said message to one or more additional message servers based on said distribution profile part;
determining, based on said distribution profile part, if said message should be stored in a database of messages to be displayed from this message server; and
based on the outcome of said determination, storing said message in a database of messages.

22. The computer program product of claim 21, wherein said message further comprises a target profile part.

23. The computer program product of claim 22, wherein said target profile part includes a demographic profile of a desired recipient of the message.

24. A computer program product embodied on a computer-readable storage medium, the computer program product including instructions which when executed by a computer system are operable to cause the computer system to perform acts comprising:
storing in a database connected to a server, a plurality of messages each associated with a targeting profile;
receiving demographic data associated with at least one room in a lodging facility;
selecting a message from said plurality of messages based on a correspondence between said targeting profile and said demographic data; and
causing said message to be transmitted to a television set in said room associated with said demographic data.

25. The computer program product of claim 24, further including instructions operable to cause the computer system to perform acts comprising:
receiving, from said television set, a return message identifying a guest's response to said message.

26. The computer program product of claim 9, wherein said return message identifies a related message, the computer program product further including instructions operable to cause the computer system to perform acts comprising:
retrieving said related message from said database; and
transmitting said message to be displayed by said television set in said room.

27. The computer program product of claim 26, wherein said related message represents a request to forward data from said messaging server to an external server, the computer program product further including instructions operable to cause the computer system to perform acts comprising:
receiving, from said television set, a return message representing a positive response to said request; and
transmitting said data to said external server.
